# EUROPÄISCHE PATENTSCHRIFT

(11) **EP 0 850 804 B1**
(45) Veröffentlichungstag und Bekanntmachung des Hinweises auf die Patenterteilung: **23.05.2001**
(21) Anmeldenummer: 97121351.7
(22) Anmeldetag: 04.12.1997
(51) Int. Cl.: B60R 7/02, B60R 11/06

(54) **Ablagebehälter**
Storage bin
Compartiment de rangement

(30) Priorität: 13.12.1996 DE 19652034
(43) Veröffentlichungstag der Anmeldung: 01.07.1998
(73) Patentinhaber: PowerPac Baumaschinen GmbH, 61476 Kronberg (DE)
(72) Erfinder: Urbschat, Lothar, 61449 Steinbach (DE); Reuter, Peter, 61440 Oberursel (DE); Lehninger, Thorsten, 61389 Arnoldshain (DE)
(74) Vertreter: Rassler, Andrea, Dipl.-Phys.

(56) Entgegenhaltungen:
- GB-A- 317 251
- GB-A- 2 230 497
- US-A- 4 029 209
- US-A- 4 917 279
- US-A- 5 501 384
- US-A- 5 593 037
- PATENT ABSTRACTS OF JAPAN vol. 097, no. 007, 31.Juli 1997 & JP 09 086283 A (SHOWA AIRCRAFT IND CO LTD), 31.März 1997,

## Beschreibung

Die Erfindung betrifft einen Ablagebehälter zum Einsatz in einen Kofferraum eines Kraftfahrzeuges gemäß dem Oberbegriff des Patentanspruchs 1.

Jeder Fahrzeugbesitzer führt im Kofferraum seines Fahrzeuges verschiedene Gegenstände mit sich, die ihm im Bedarfsfall eventuell von Nutzen sein können. Dazu gehören neben Werkzeug und Warndreieck auch Eiskratzer, Fensterreiniger, Putztücher, Überbrückungskabel und ähnliches.

Diese Gegenstände besitzen unterschiedlichste Formen und Größen und liegen entweder mehr oder weniger unsortiert im Kofferraum oder werden in standardisierten Boxen gelagert, die im Handel erhältlich sind.

Viele Fahrzeughersteller haben neben dem Reserverad ein offenes Aufnahmebehältnis vorgesehen, das für die Lagerung solcher Gegenstände genutzt werden kann.

Da die angeführten Möglichkeiten aber nicht auf die Größe und Form der mitgeführten Kleinteile abgestimmt sind, führt dies zu einem Platzverlust im Kofferraum.
Eine optimale Raumausnutzung bei beladenem Kofferraum ist vielfach nur dann möglich, wenn die Kleinteile dazu genutzt werden, auftretende "Löcher" damit auszufüllen, was im Bedarfsfall eine langwierige Suche nach einem gewünschten Gegenstand zur Folge hat.

Aus der US-A-5 501 384, welche die Merkmale des Oberbegriffs des Anspruch 1 zeigt, ist ein aus zahlreichen Einzelteilen bestehender Behälter für den annähernd formschlüssigen Einsatz im Kofferraum eines Fahrzeuges bekannt, in welchem Fahrzeugzubehör aber auch Kleinteile sortiert gelagert werden. Dieser Behälter besteht aus einem aus Seitenwänden und Boden bestehenden Gehäuse, welches mit einer Abdeckung verschlossen ist. Zur Einfügung von Stegen, die das Gehäuseinnere in Fächer unterteilen, sind im Boden Nuten und in den Seitenwänden Führungen vorgesehen. Die mechanische Verbindung dieser Einzelteile bedingt einen aufwendigen Montageprozeß mit den unterschiedlichsten Montageschritten.

Auch aus den Patent Abstracts of Japan ,Vol. 97 , No. 7, 31. Juli 1997 ist ein gattungsgemäßer Ablagebehälter bekannt, bei welchen Stege variabel in an den Seitenwänden angebrachte Führungen eingeführt werden.

Ein einstückig mit einem Unterteilungssteg ausgeführter Ablagebehälter ist aus der US-A-5 593 037 bekannt.

Der Erfindung liegt somit die Aufgabe zugrunde, einen Ablagebehälter für den Einsatz in den Kofferraum eines Kraftfahrzeuges anzugeben, welcher in einfacher Form herstellbar ist.

Die Aufgabe wird durch die Merkmale des Kennzeichens des Patentanspruchs 1 gelöst.

Vorteilhafterweise füllt das Gehäuse nur einen Teil des Innenraumes des Kofferraumes aus, wobei der Boden annähernd die gesamte Bodenfläche des Kofferraumes abdeckt und die Seitenwände der sie umgebenden Innenraumkontur des Kofferraumes angepaßt sind, wobei die Abdeckung auf der dem Innenraum des Kofferraumes zugewandten Seite eben ausgebildet ist.

Der Vorteil eines solchen Ablagebehälters besteht auf Grund der konturenangepaßten Form darin, daß auf Befestigungsmaßnahmen verzichtet werden kann und ein Verrutschen des Behälters sicher verhindert wird. Weiterhin ist ein sicherer und aufgeräumter Platz für die mitgeführten Gegenstände vorhanden.
Die Anordnung des Stabilisierungssteges erlaubt eine Belastung der Abdeckung mit Gegenständen, welche ein Gewicht bis 100 kg aufweisen.

Auf Grund der Ausnutzung des gesamten Bodens des Kofferraumes für den Ablagebehälter ist es möglich, diesen in der Höhe sehr flach zu gestalten, was einen nur unwesentlichen Höhenverlust im Kofferraum bedingt. Insbesondere beim Einsatz im Kofferraum eines Kraftfahrzeuges steht dem Nutzer auch weiterhin ausreichend Raum zur Aufnahme von großvolumigen Gegenständen zur Verfügung.

Insbesondere die ebene Gestaltung der Abdeckung auf der dem Innenraum des Kofferraumes zugewandten Seite erlaubt die Nutzung des Kofferraumes in der üblichen Art und Weise.

In einer Ausführung ist zur Stabilisierung der Abdeckung an der dem Gehäuseinnenraum zugewandten Seite der Abdeckung mindestens eine Verstrebung ausgebildet. Auf Grund dieser Anordnung ist die Abdeckung sehr stabil und belastbar.

Besonders stabil ist die Abdeckung dann, wenn sie eine Stegaufnahme aufweist, die dem festen Steg direkt gegenüberliegt, wobei der Steg beim Aufsetzen der Abdeckung auf das Gehäuse oder erst bei äußerer Belastung durch aufgelegte Gegenstände in die Stegaufnahme eingreift.

Eine weitere Möglichkeit, die Stabilität der Abdeckung zu verbessern, besteht darin, das die Seitenwände des Gehäuses in gleicher Höhe einen zum Gehäuseinnenraum weisenden Absatz aufweisen, der umlaufend ausgebildet ist und zur Aufnahme der Abdeckung dient.

Die entstandenen Fächer erlauben eine geordnete Ablage der mitgeführten Gegenstände sowie ein gezieltes Wiederauffinden.

Der Steg und die Innenseiten der Gehäuseseitenwände weisen Rasteinrichtungen auf, in die wenigstens ein Zusatzsteg eingreift. Dadurch ist das Fach durch den Nutzer individuell in der Größe unterteilbar.

Durch das Auslegen mit Schaumstoff oder Ausschäumen des Faches wird ein Klappern der losen Gegenstände während der Fahrt unterdrückt.

Um bei einem teilbeladenen Behältnis ohne viele Handgriffe das gewünschte Fach zugänglich zu machen, weist die Abdeckung mindestens eine Klappe oder/und einen abnehmbaren Deckel auf, welcher über dem Fach angeordnet ist. Dem Nutzer wird somit ein gezielter Zugriff zum gewünschten Gegenstand erlaubt.

In einer Ausgestaltung weist das Gehäuse eine abnehmbare Abdeckung auf.

In einer Weiterbildung ist der Boden des Gehäuses eben gestaltet, wobei über einem Hohlraum, der durch den Boden und die unregelmäßige Innenraumkontur des Kofferraumes gebildet wird, eine Bodenklappe oder ein abnehmbarer Bodendeckel ausgebildet ist. Dieser Hohlraum kann ohne Ausbau des Ablagebehälters mit Gegenständen gefüllt werden und diese jederzeit wieder ohne großen Aufwand entnommen werden.

Die Erfindung läßt zahlreiche Ausführungsbeispiele zu. Eines davon soll anhand der in der Zeichnung schematisch dargestellten Figuren näher erläutert werden.

Es zeigt
Figur 1: erfindungsgemäßer Behälter
Figur 2: eine Möglichkeit des Einsatzes des Behälters in einen Kofferraum eines Fahrzeuges
Figur 3: Schnitte durch den Behälter gemäß Figur 1, wobei die Figuren 3a und 3b keine Ausführungsform der Erfindung darstellen.

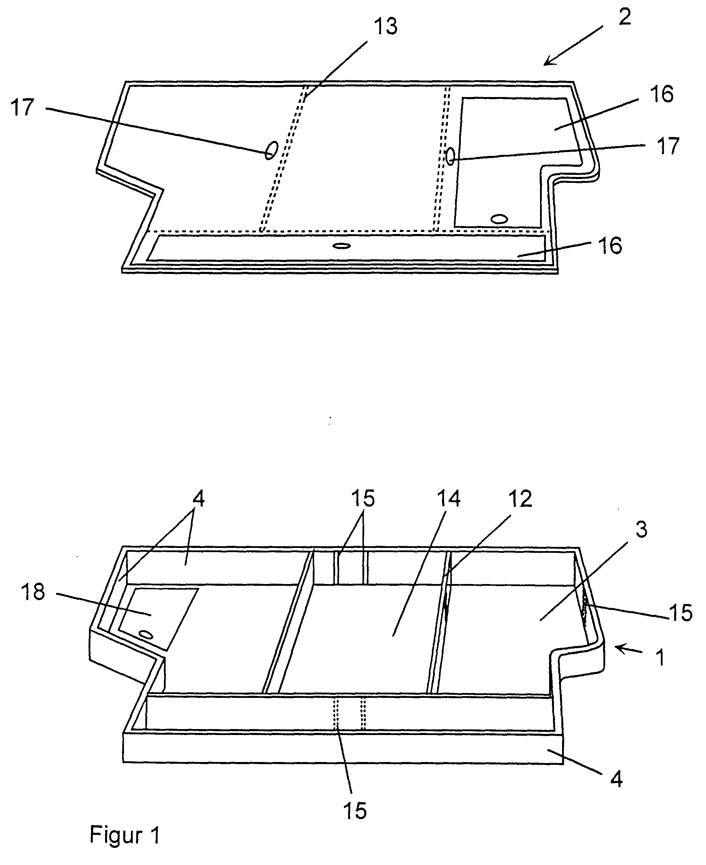

In der Figur 1 ist ein kastenähnliches Gehäuse 1 mit Abdeckung 2 dargestellt, welches eine ebene Bodenplatte 3 aufweist, auf deren Rand senkrecht umlaufend Seitenwände 4 angeordnet sind. Auf den umlaufenden Seitenwänden liegt eine Abdeckung 2 auf, die ebenfalls eben ausgebildet ist. Der Abstand zwischen Abdeckung 2 und Bodenplatte 3 ist an allen Stellen des Behälters 1,2 gleich, d.h. die Seitenwände 4 haben die gleiche Höhe.

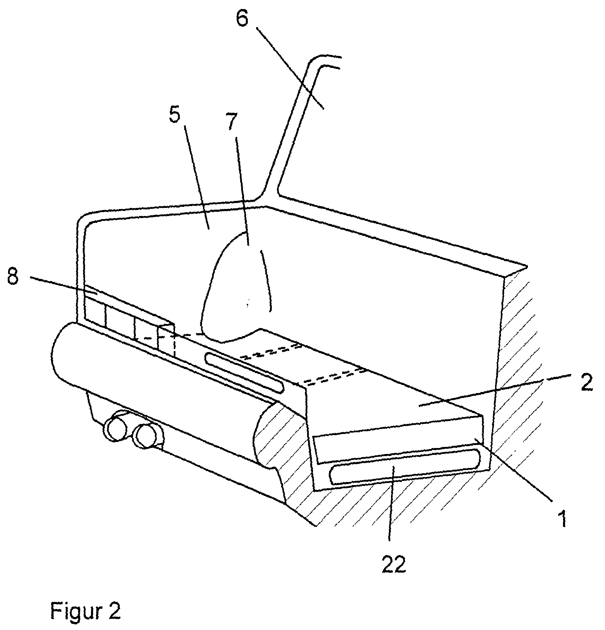

Dieser Behälter 1,2 ist als Einsatz für den Kofferraum 5 eines Kraftfahrzeuges 6 vorgesehen (Figur 2). Die Abmaße der Bodenplatte 3 des Behälters 1,2 sind nur unwesentlich kleiner als die Maße des Kofferraumbodens des jeweiligen Fahrzeugtyps, so daß sich der Behälter 1,2 ohne große Widerstände überwinden zu müssen, mühelos in den Kofferraum 5 einsetzen und wieder ausbauen läßt.

Der Abstand zwischen Bodenplatte 3 und Abdeckung 2 beträgt ungefähr 10 - 15 cm, was nur einen unwesentlichen Höhenverlust im Kofferraum 5 bedingt.
Die ebene Gestaltung der Abdeckung 2 erlaubt, daß der Kofferraum 5 wie bisher ohne Einschränkungen beladen werden kann .

Die Kontur der Innenbegrenzung des Kofferraumes 5 wird hauptsächlich von in diesen hineinragenden Radkästen 7 und Beleuchtungseinsätzen 8 bestimmt. Die Seitenwände 4 des Ablagebehälters 1,2 für Kleinteile sind , wie aus Figur 2 ersichtlich, an diese Form angepaßt.

Das offene Gehäuse 1, bestehend aus Bodenplatte 3 und Seitenwänden 4, ist als Kunststoffspritzgehäuse vorzugsweise aus Recyclingmaterial ausgebildet, was die Herstellung in nur einem Arbeitsgang erlaubt.

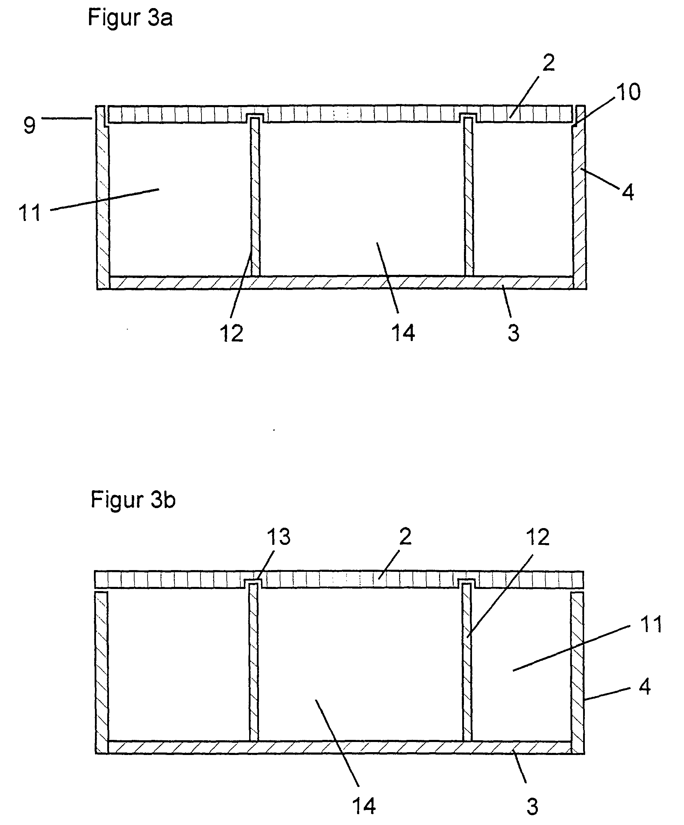

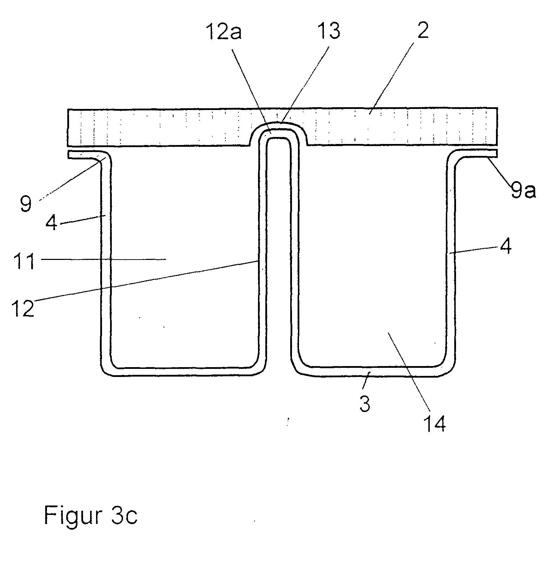

In Figur 3 ist die Auflage der Gehäuseabdeckung 2 auf die Seitenwände 4 des Gehäuses 1 dargestellt.
Dabei zeigt Figur 3c eine Ausführungsform der Erfindung, während die Figuren 3a und 3b Ausführungsformen zeigen, die nicht zur Erfindung gehören, aber das Verständnis der Erfindung erleichtern.

Die Seitenwände 4 weisen an ihren der Bodenplatte 3 abgewandten Enden 9 einen zum Gehäuseinnenraum 11 gerichteten umlaufenden Absatz 10 auf, auf welchem die Abdeckung 2 formschlüssig aufliegt. Der Absatz 10 ist dabei in einer solchen Höhe der Seitenwände 4 angebracht, daß die Enden 9 der Seitenwände 4 nach Auflage der Abdeckung 2 mit dieser eine Flucht bilden. (Figur 3a).

In einer anderen Ausführung (Figur 3b) bedeckt die Abdeckung 2 die Seitenwände 4 vollständig und weist demzufolge die gleichen Abmessungen wie die Bodenplatte 3 auf.

Um die Abdeckung 2 gegenüber dem Gewicht der aufliegenden Teile, welches bis 100 kg betragen kann, zu stabilisieren, sind in dem Gehäuseinnenraum 11 drei Stege 12 fest mit der Bodenplatte 3 und den Seitenwänden 4 verankert.

Bei der Ausführung gemäß Figur 3a ist die Höhe der Stege 12 größer als die Höhe des Absatzes 10 aber geringer als die Gesamthöhe der Seitenwände 4. Gemäß Figur 3b ist die Höhe der Stege 12 gegenüber der Höhe der Seitenwände 4 um den Betrag der Tiefe der in die Abdeckung 2 eingebrachten Stegaufnehmungen 13 vergrößert. Die Stegaufnehmungen 13 sind in die Abdeckung 2 eingearbeitet. Bei aufliegender Abdeckung 2 greifen die Stege 12 in diese Aufnehmungen 13 ein .

Figur 3c zeigt ein wannenähnliches Gehäuse, bei welchem der Boden 3, die Seitenwände 4 sowie der Steg 12 einstückig ausgebildet sind.

Ein solches einstückiges Gehäuse 1 ist einfach in einem Arbeitsgang eines Kunststofftiefziehprozesses herstellbar. Der Steg 12 ist dabei hohl gestaltet. Um eine ausreichende Stabilisierung des Gehäuses zu erreichen, ist das in die Abdeckung 2 eingreifende Ende 12a des Stegs 12 breitflächig gestaltet, um die übertragenen Kräfte aufnehmen zu können. Die dem Stegende 12a gegenüberliegende Ausnehmung 13 der Abdeckung 2 ist auch hier der Form des Stegendes 12a angepaßt.

Das tiefgezogene Gehäuse 1 ist zweischichtig ausgebildet und besteht aus einem harten Kunststoff, beispielsweise Polyuthan, welches im Gehäuseinnenraum mit einem Elastomer ausgeschäumt ist.

Die Enden 9 der Seitenwände 4 weisen einen nach außen gerichteten Rand 9a auf, welcher den Seitenrand 4 nur wenig überragt und der einen anderen Verlauf um den Gehäuseumfang gegenüber dem Kofferraum aufweisen kann als die Seitenwände 4.
Diese Ausgestaltung erlaubt eine einfache Anpassung des erfindungsgemäßen Behälters an die Innenform des Kofferraums, da vor Ort durch Abtragen des Randes 9a eine optimale Paßform an den Kofferraum erreicht wird.

Alle dargestellten Ausführungen gewährleisten, daß die Abdeckung 2 gegen Verrutschen gesichert ist.

Die festen Stege 12 bewirken eine Unterteilung des Ablagebehälters 1,2 in verschiedene Fächer 14. Diese Fächer 14 können weiter unterteilt werden, indem an den Stegen 12 beidseitig Rasteinrichtungen in Form von Vorsprüngen 15 in gleichmäßigen Abständen vorgesehen sind. Diese Rasteinrichtungen 15 sind ebenfalls an den Innenseiten der Seitenwände 4 angeordnet. So können bewegliche , nicht weiter dargestellte Stegteile, die seitlich beidseitig eine Nut zur Aufnahme der Vorsprünge 15 aufweisen , variabel eingesetzt werden.

Die Abdeckung 2 weist mehrere Klappen 16 auf, die den durch die festen Stege 12 gebildeten Fächern 14 gegenüberliegen und einen Zugriff auf das einzelne Fach 14 ermöglichen, ohne daß die ganze Abdeckung 2 entfernt werden muß. Eine Kennzeichnung der Fächer 14 durch Symbole gewährleistet dem Nutzer einen gezielten Zugriff zum gewünschten Gegenstand.

Die Abdeckung 2 weist vorteilhafterweise an jeder Schmalseite mittig eine Öffnung 17 auf, durch welche hindurch der Nutzer in je eine nicht weiter dargestellte Griffmulde greifen kann, die in der anliegenden Stegseitenwand ausgebildet ist. Mittels dieser Griffmulden kann der Ablagebehälter 1,2 leicht transportiert werden. Die Öffnungen 17 in der Abdeckung 2 dienen gleichzeitig zum Abheben der Abdeckung 2.

Der Boden des Kofferraumes 5 beherbergt das Ersatzrad 22, welches aber nicht immer den gesamten Fahrzeugboden ausfüllt. Neben dem Ersatzrad ist meistens noch ein offener Behälter vorgesehen. Der Boden des Ablagebehälters 1,2 kann an dieser Stelle eine Vertiefung aufweisen, die paßgenau in diesen offenen Behälter einsetzbar ist. So kann dieser Raum für die Lagerung der mitgeführten Gegenstände genutzt werden.

Eine andere Möglichkeit der Nutzung dieses Raumes besteht darin, eine Klappe 18 oder einen abnehmbaren Deckel an dieser Stelle in der Bodenplatte 3 vorzusehen, so daß durch ein einfaches Durchgreifen durch die Bodenplatte 3 dieser Raum erreichbar ist. (Figur 1)

In einer anderen Gestaltung ist ein erfindungsgemäßer Aufnahmebehälter 1,2 nahezu senkrecht über diesem im Kofferraum 5 vorhandenen Behälter angeordnet ist und in diesen eingesetzt. Diese Ausführung füllt den Bauraum zwischen Radkasten 7 und Beleuchtungseinsatz 8 in der ganzen Höhe bis zur Kofferraumklappe aus. Dabei ist die Abdeckung 2 seitlich zum Kofferraum 5 hin angeordnet und bildet einen glatten Abschluß.

## Patentansprüche

1. Ablagebehälter zum Einsatz in einen verschließbaren Kofferraum eines Kraftfahrzeuges , bestehend aus einem Gehäuse mit einer Gehäuseöffnung, die mit einer Abdeckung versehen ist, wobei mindestens Abschnitte der Außenkontur des Gehäuses (1) annähernd einer unregelmäßigen Innenraumkontur des Kofferraumes (5) zum annähernden formschlüssigen Einsatz angepaßt sind und die Abdeckung (2) das Gehäuse (1) gegenüber dem, weitere bewegliche Gegenstände aufnehmenden Innenraum des Kofferraumes (5) abschließt, **dadurch gekennzeichnet,** daß das einstückig ausgebildete, einen Boden (3), Seitenwände (4) und einen Stabilisierungssteg (12) aufweisende Kunststoffgehäuse (1) in einem Kunstofftiefziehprozess hergestellt ist, wobei die Abdeckung (2) zur Stabilisierung gegenüber äußerer Belastung direkt auf einem hohlen Steg (12) aufliegt, welcher den Gehäuseinnenraum (11) gleichzeitig in Fächer (14) unterteilt.

2. Ablagebehälter nach Anspruch 1 **dadurch gekennzeichnet,** daß das Gehäuse (1) nur einen Teil des Innenraumes des Kofferraumes (5) ausfüllt, wobei der Boden (3) die gesamte Bodenfläche des Kofferraumes (5) nahezu abdeckt und die Seitenwände (4) der sie umgebenden Innenraumkontur des Kofferraumes (5) angepaßt sind, wobei die Abdeckung (2) auf der dem Innenraum des Kofferraumes (5) zugewandten Seite eben ausgebildet ist.

3. Ablagebehälter nach Anspruch 2 **dadurch gekennzeichnet,** daß die Abdeckung (2) an der einem Gehäuseinnenraum (11) zugewandten Seite zur Stabilisierung mindestens eine Verstrebung aufweist.

4. Ablagebehälter nach Anspruch 1 **dadurch gekennzeichnet,** daß an dem Steg (12) beidseitig und an der Innenseite der Gehäuseseitenwände (4) Rasteinrichtungen (15) angeordnet sind, in welche mindestens ein Zusatzsteg eingreifen kann, wodurch jedes Fach variabel unterteilbar ist.

5. Ablagebehälter nach Anspruch 1 **dadurch gekennzeichnet,** daß der feste Steg (12) in eine der dem Steg zugewandten Seite der Abdeckung (2) verlaufende Stegaufnahme (13) eingreift und die Seitenwände (4) des Gehäuses (1) in gleicher Höhe einen zum Gehäuseinnenraum (11) weisenden Absatz (10) aufweisen, der umlaufend ausgebildet ist und zur Aufnahme der Abdeckung (2) dient.

6. Ablagebehälter nach einem der Ansprüche 4 oder 5 **dadurch gekennzeichnet,** daß die Abdeckung (2) mindestens eine Klappe (18) oder/und einen abnehmbaren Deckel aufweist, welcher über dem Fach (14) angeordnet ist.

7. Ablagebehälter nach Anspruch 2 **dadurch gekennzeichnet,** daß der Boden (3) eben ausgebildet ist und über einem Hohlraum, der durch den Boden (3) des Gehäuses (1) und die unregelmäßige Kontur des Kofferraumes (5) gebildet ist, eine Bodenklappe oder einen Bodendeckel aufweist.

## Claims

1. Storage container for insertion into a lockable boot space of a motor vehicle, comprising a housing having a housing opening which is provided with a covering, at least sections of the outer contour of the housing (1) being approximately matched to an irregular interior contour of the boot space (5) so as to make the insertion approximately form-fitting, and the covering (2) closing off the housing (1) from the interior of the boot space (5), the said interior accommodating further movable objects, characterized in that the plastic housing (1), which is of one-piece design and has a bottom (3), side walls (4) and a stabilizing web (12), is produced in a plastic thermoforming process, the covering (2), in order to be stabilized with respect to exterior loading, resting directly on a hollow web (12) which, at the same time, divides the housing interior (11) into compartments (14).

2. Storage container according to Claim 1, characterized in that the housing (1) only fills part of the interior of the boot space (5), the bottom (3) virtually covering the entire floor area of the boot space (5) and the side walls (4) being matched to the interior contour, which surrounds them, of the boot space (5), the covering (2) being of flat design on the side which faces the interior of the boot space (5).

3. Storage container according to Claim 2, characterized-in that the covering (2) has at least one strutting arrangement for stabilization purposes on the side which faces the housing interior (11).

4. Storage container according to Claim 1, characterized in that latching devices (15) are arranged on both sides of the web (12) and on the inside of the housing side walls (4) and at least one additional web can engage therein, as a result of which each compartment can be divided in a variable manner.

5. Storage container according to Claim 1, characterized in that the fixed web (12) engages in a web socket (13) running to that side of the covering (2) which faces the web, and the side walls (4) of the housing (1) have, at the same height, a shoulder (10) which faces the housing interior (11), is of encircling design and is used for holding the covering (2).

6. Storage container according to one of Claims 4 or 5, characterized in that the covering (2) has at least one flap (18) and/or a removable lid which is arranged over the compartment (14).

7. Storage container according to Claim 2, characterized in that the bottom (3) is of flat design and, over a cavity formed by the bottom (3) of the housing (1) and the irregular contour of the boot space (5), has a bottom flap or a bottom lid.

## Revendications

1. Compartiment de rangement destiné à être inséré dans un espace pour bagages verrouillable d'un véhicule à moteur, se composant d'une caisse avec une ouverture de caisse pourvue d'un recouvrement, au moins des portions du contour extérieur de la caisse (1) étant adaptées approximativement à un contour d'espace interne irrégulier de l'espace pour bagages (5) pour l'insertion approximative avec fermeture par engagement positif, et le recouvrement (2) fermant la caisse (1) par rapport à l'espace interne recevant d'autres objets mobiles de l'espace pour bagages (5), **caractérisé en ce que** la caisse en plastique (1) conçue d'une seule pièce, présentant un fond (3), des parois latérales (4) et une nervure de stabilisation (12) est fabriquée suivant un procédé d'emboutissage profond de plastique, dans lequel le recouvrement (2) repose, pour la stabilisation par rapport aux sollicitations extérieures, directement sur une nervure creuse (12) qui divise en même temps l'espace interne (11) de la caisse en casiers (14).

2. Compartiment de rangement selon la revendication 1, **caractérisé en ce que** la caisse (1) ne remplit qu'une partie de l'espace interne de l'espace pour bagages (5), le fond (3) recouvrant pratiquement toute la surface du fond de l'espace pour bagages (5) et les parois latérales (4) étant adaptées au contour de l'espace interne de l'espace pour bagages (5) qui les entoure, le recouvrement (2) étant formé à plat sur le côté tourné vers l'espace interne de l'espace pour bagages (5).

3. Compartiment de rangement selon la revendication 2, **caractérisé en ce que** le recouvrement (2) présente sur le côté tourné vers un espace interne (11) de la caisse au moins une entretoise pour la stabilisation.

4. Compartiment de rangement selon la revendication 1, **caractérisé en ce que** des dispositifs d'encliquetage (15) sont disposés des deux côtés sur la nervure (12) et sur le côté interne des parois latérales (4) de la caisse, au moins une nervure supplémentaire pouvant venir en prise dans ces dispositifs d'encliquetage, chaque casier étant ainsi divisible de manière variable.

5. Compartiment de rangement selon la revendication 1, **caractérisé en ce que** la nervure fixe (12) vient en prise dans un logement pour nervure (13) s'étendant dans un côté du recouvrement (2) tourné vers la nervure, et les parois latérales (4) de la caisse (1) présentent un retrait (10) à la même hauteur tourné vers l'espace interne (11) de la caisse, qui est formé sur la périphérie et sert à recevoir le recouvrement (2).

6. Compartiment de rangement selon l'une quelconque des revendications 4 ou 5, **caractérisé en ce que** le recouvrement (2) présente au moins un volet (18) et/ou un couvercle amovible, qui est disposé par-dessus le casier (14).

7. Compartiment de rangement selon la revendication 2, **caractérisé en ce que** le fond (3) est réalisé de manière plane, et présente, par-dessus un espace creux qui est formé par le fond (3) de la caisse (1) et le contour irrégulier de l'espace pour bagages (5), un volet de fond ou un couvercle de fond.
